# EUROPÄISCHE PATENTSCHRIFT

(11) **EP 4 408 659 B1**
(45) Veröffentlichungstag und Bekanntmachung des Hinweises auf die Patenterteilung: **05.11.2025**
(21) Anmeldenummer: 22797701.4
(22) Anmeldetag: 27.09.2022
(51) Int. Cl.: B32B 7/12, B32B 15/08, B32B 27/08, B32B 27/30, B32B 27/36, B32B 27/40, C08J 5/18

(54) **BIOLOGISCH ABBAUBARE LAMINIERFOLIE**
BIODEGRADABLE LAMINATION FILM
FEUILLE STRATIFIÉE BIODÉGRADABLE

(30) Priorität: 28.09.2021 EP 21199555
(43) Veröffentlichungstag der Anmeldung: 07.08.2024
(73) Patentinhaber: BASF SE, 67056 Ludwigshafen am Rhein (DE)
(72) Erfinder: SCHICK, Michael Bernhard, 67056 Ludwigshafen (DE); LOHMANN, Jerome, 67056 Ludwigshafen (DE); WITT, Timo Benjamin, 67056 Ludwigshafen (DE); BLOSS, Frank, 67056 Ludwigshafen (DE)
(74) Vertreter: BASF IP Association
(86) Internationale Anmeldenummer: PCT/EP2022/076843
(87) Internationale Veröffentlichungsnummer: WO 2023/052360

(56) Entgegenhaltungen:
- EP-A1- 2 598 546
- EP-B1- 2 598 546
- WO-A1-2010/034712
- WO-A1-2012/013506
- WO-A1-2021/175676
- WO-A1-2023/052360
- US-A1- 2015 274 350
- US-A1- 2020 376 822
- BASF SE: "Epotal P100 ECO", 1 April 2015 (2015-04-01), pages 1 - 2, XP055647649, Retrieved from the Internet <URL:https://www.dispersions-pigments.basf.com/portal/load/fid819947/TI_ED_2215_e_Epotal_P100_ECO_187214_SCREEN_02.pdf> [retrieved on 20191129]

## Beschreibung

Die vorliegende Erfindung betrifft eine biologisch abbaubare Laminierfolie mit dem Schichtaufbau A/B, wobei die 0,5 bis 7 µm dicke Schicht A einen Polyurethan- oder Acrylat-klebstoff enthält; und Schicht B einen aliphatischen Polyester und/oder aliphatisch-aromatischen Polyester und 0,05 bis 0,3Gew.-% eines Gleitmittels ausgewählt aus Erucasäureamid und Stearinsäureamidumfasst, wobei der aliphatisch-aromatische Polyester sich wie folgt zusammensetzt:b1-i) 30 bis 70 mol %, bezogen auf die Komponenten b1-i und b1-ii, einer aliphatischen C₆₋C₁₈-Dicarbonsäure; b1-ii) 30 bis 70 mol %, bezogen auf die Komponenten b1-i und b1-ii, einer aromatischenDicarbonsäure; b1-iii)98 bis 100 mol %, bezogen auf die Komponenten b1-i und b1-ii, 1,3 Propandiol oder1,4-Butandiol; b1-iv)0 bis 2 Gew.- %, bezogen auf die Komponenten b1-i bis b1-iii eines Kettenverlängerers und/ oder Verzweigers, wobei die Ercucasäureamid enthaltende Schicht B eine Schichtdicke von 5 bis 80 µm aufweist und die Stearinsäureamid enthaltende die Schicht B eine Schichtdicke von 5 bis 50 µm aufweist.

Weiterhin betrifft die Erfindung die Verwendung der obengenannten Laminierfolie zur Beschichtung von Substraten wie insbesondere Papier oder Karton sowie ein Verfahren zur Herstellung einer Verbundfolie, wobei die obengenannte Laminierfolie auf ein Substrat gepresst wird.

Flexible Verpackungen werden insbesondere in der Nahrungsmittelindustrie eingesetzt. Sie bestehen häufig aus Verbundfolien, die durch einen geeigneten Klebstoff miteinander verklebt sind, wobei mindestens eine der miteinander verklebten Folien eine Polymerfolie ist. Es besteht eine hohe Nachfrage nach biologisch abbaubaren Verbundfolienverpackungen, die nach

Gebrauch durch Kompostierung entsorgt werden können.

In der Literatur wurden bisher verschiedene Ansätze verfolgt:
Aus der WO 2010/034712 ist ein Verfahren zur Extrusionsbeschichtung von Papier mit biologisch abbaubaren Polymeren beschrieben. Bei diesem Verfahren kommen in der Regel keine Klebstoffe zum Einsatz. Die mit dem in der WO 2010/034712 beschriebenen Verfahren zugänglichen beschichteten Papiere sind aufgrund der eingeschränkten Haftung an das Papier, den mechanischen Eigenschaften, den Barriereeigenschaften und des biologischen Abbaus des Papierverbunds nicht für jede Anwendung geeignet.

WO 2012/013506 beschreibt die Verwendung eines wässrigen Polyurethan-Dispersionsklebstoffs zur Herstellung von Verbundfolien, die teilweise industriell kompostierbar sind. Der Abbau in industriellen Kompostieranlagen findet unter hoher Luftfeuchtigkeit, in Gegenwart bestimmter Mikroorganismen und Temperaturen von ca. 55° C statt. Die Anforderungen an flexible Verpackungen hinsichtlich ihrer biologischer Abbaubarkeit steigen ständig an, sodass heute häufig das Erfordernis der Heimkompostierbarkeit für zahlreiche Anwendungen gefordert wird. Die in der WO 2012/013506 beschriebenen Verbundfolien erfüllen dieses Kriterium nicht ausreichend und sind auch hinsichtlich ihrer mechanischen Eigenschaften, und Barriereeigenschaften nicht für alle Anwendungen flexibler Verpackungen geeignet. US2020376822 offenbart eine biologisch abbaubare dreischichtige Polyesterfolie.

Ziel der vorliegenden Erfindung war es daher Laminierfolien bereitzustellen, die in hinsichtlich ihrer biologischen Abbaubarkeit verbessert sind, vorzugsweise heimkompostierbar sind, eine gute Haftung zum Substrat, vorzugweise zum Papier aufweisen und auch die sonstigen Anforderungen moderner flexibler Verpackungen erfüllen.

Überraschenderweise erfüllen die eingangs beschriebenen Laminierfolien diese Kriterien.

Die Erfindung wird im Folgenden näher beschrieben.

Schicht A kann auch als Klebeschicht bezeichnet werden und stellt die Verbindung der Schicht B mit dem Substrat her. Die Schicht A weist eine Schichtdicke von 0,5 bis 7 µm auf und enthält einen Polyurethan- oder Acrylat-klebstoff.

Vorzugsweise besteht der Klebstoff in Schicht A im Wesentlichen aus mindestens einem in Wasser dispergiertem Polyurethan als polymeres Bindemittel und optional Zusatzstoffen wie Füllstoffen, Verdicker, Entschäumer etc. wie er in der WO 2012/013506 detailliert beschrieben ist. Die wesentlichen Merkmale des WO 2012/013506 beschriebenen Polyurethanklebstoffs, auf die ausdrücklich Bezug genommen wird, sind im Folgenden aufgeführt:
Das polymere Bindemittel liegt vorzugsweise als Dispersion in Wasser oder auch in einem Gemisch aus Wasser und wasserlöslichen organischen Lösungsmitteln mit Siedepunkten von vorzugsweise unter 150°C (1 bar) vor. Besonders bevorzugt ist Wasser als einziges Lösungsmittel. Bei Gewichtsangaben zur Zusammensetzung des Klebstoffs wird das Wasser oder sonstige Lösemittel nicht mitberechnet.

Vorzugsweise ist der Polyurethandispersionsklebstoff biologisch abbaubar. Biologische Abbaubarkeit im Sinne dieser Anmeldung ist beispielsweise dann gegeben, wenn das Verhältnis von in Form von CO₂ freigesetztem, gasförmigen Kohlenstoff zu dem Gesamtkohlenstoffgehalt des eingesetzten Materials nach 20 Tagen mindestens 30%, vorzugsweise mindestens 60 oder mindestens 80% beträgt, gemessen gemäß der Norm ISO 14855 (2005).

Die Polyurethane bestehen vorzugsweise überwiegend aus Polyisocyanaten, insbesondere Diisocyanaten einerseits und als Reaktionspartner, Polyesterdiole sowie bifunktionellen Carbonsäuren andererseits. Vorzugsweise ist das Polyurethan zu mindestens 40 Gew.-%, besonders bevorzugt zu mindestens 60 Gew.-% und ganz besonders bevorzugt zu mindestens 80 Gew.-% aus Diisocyanaten, Polyesterdiolen und bifunktionellen Carbonsäuren aufgebaut.

Das Polyurethan kann amorph oder teilkristallin sein. Wenn das Polyurethan teilkristallin ist, so ist der Schmelzpunkt vorzugsweise kleiner 80 °C. Bevorzugt enthält das Polyurethan dazu Polyesterdiole in einer Menge von mehr als 10 Gew.-%, mehr als 50 Gew.-% oder mindestens 80 Gew.-%, bezogen auf das Polyurethan. Besonders geeignet sind die unter dem Handelsnamen Epotal^{®} vertriebenen Polyurethandispersionen der Fa. BASF SE.

Insgesamt ist das Polyurethan vorzugsweise aufgebaut aus:
a) Diisocyanaten,
b) Diolen, von denen
b1) 10 bis 100 mol-%, bezogen auf die Gesamtmenge der Diole (b), Polyesterdiole sind und ein Molekulargewicht von 500 bis 5000 g/mol aufweisen,
b2) 0 bis 90 mol-%, bezogen auf die Gesamtmenge der Diole (b), ein Molekulargewicht von 60 bis 500 g/mol aufweisen,
c) mindestens einer bifunktionellen Carbonsäure, ausgewählt aus Dihydroxycarbonsäuren und Diaminocarbonsäuren,
d) optional weiteren, von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) optional von den Monomeren (a) bis (d) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Insbesondere bevorzugt ist ein heimkompostierbarer Klebstoff in Schicht A wie er in PCT/EP2021/054570, veröffentlicht als WO 2021/175676 A1, beschrieben ist. Die wesentlichen Merkmale des PCT/EP2021/054570 beschriebenen Polyurethanklebstoffs, auf die hier ausdrücklich Bezug genommen wird, sind im Folgenden aufgeführt:
Die wässrigen Polyurethan-Dispersionsklebstoffe der PCT/EP2021/054570 sind zur Herstellung von Verbundfolien geeignet, die unter Heimkompostbedingungen (25 ±5°C) biologisch abbaubar sind, wobei mindestens eine Schicht B und ein zweites Substrat unter Verwendung des Polyurethan-Dispersionsklebstoffs A verklebt wird, und
wobei mindestens eines der Substrate eine Polymerfolie ist, die unter
Heimkompostbedingungen biologisch abbaubar ist, und wobei mindestens 60 Gew.-% des Polyurethans bestehen aus:
   (a) mindestens einem Diisocyanat
   (b) mindestens einem Polyesterdiol, und
   (c) mindestens einer bifunktionellen Carbonsäure, ausgewählt aus Dihydroxycarbonsäuren und Diaminocarbonsäuren;
wobei das Polyurethan eine Glasübergangstemperatur unter 20°C hat und entweder keinen Schmelzpunkt über 20°C oder einen Schmelzpunkt über 20°C mit einer Schmelzenthalpie von weniger als 10 J/g hat, und
wobei vorzugsweise die Schicht A des Polyurethanklebstoffs unter Heimkompostbedingungen innerhalb von 360 Tagen zu mehr als 90 Gew.-% in CO₂ und Wasser zerfällt; und wobei die Schicht A des Polyurethanklebstoffs vorzugsweise heimkompostierbar ist, und
wobei vorzugsweise der daraus hergestellte Laminierfilm A/B unter Heimkompostbedingungen biologisch abbaubar ist, wenn höchstens 10 % des ursprünglichen Trockengewichts des Materials nach aerober Kompostierung bei 25 ±5°C über einen Zeitraum von höchstens 180 Tagen in einer Siebfraktion > 2 mm vorhanden ist.

Vorzugsweise ist eine Folie aus dem Polyurethanklebstoff, der Schicht B und/oder dem Substrat und/oder der Verbundfolie heimkompostierbar.

Insbesondere geeignet sind die unter dem Handelsnamen Epotal^{®} Eco vertriebenen Polyurethandispersionen der Fa. BASF SE.

Die erfindungsgemäße Schicht B weist eine Schichtdicke von 5 bis 150 µm auf und umfasst einen aliphatischen Polyester und/oder aliphatisch-aromatischen Polyester, wobei der aliphatisch-aromatische Polyester sich wie folgt zusammensetzt:
b1-i) 30 bis 70 mol %, bezogen auf die Komponenten b1-i und b1-ii, einer C₆-C₁₈-Dicarbonsäure;
b1-ii) 30 bis 70 mol %, bezogen auf die Komponenten b1-i und b1-ii, Terephthalsäure;
b1-iii) 98 bis 100 mol %, bezogen auf die Komponenten b1-i und b1-ii, 1,3 Propandiol oder 1,4-Butandiol;
b1-iv) 0 bis 2 Gew.- %, bezogen auf die Komponenten b1-i und b1-iii eines Kettenverlängerers und/oder Verzweigers

Unter aliphatischen Polyester werden beispielsweise die in der WO 2010/034711 näher beschriebenen Polyester verstanden, auf die hier ausdrücklich Bezug genommen wird.

Die Polyester der WO 2010/034711 (i) sind in der Regel wie folgt aufgebaut:
i-a) 80 bis 100 mol %, bezogen auf die Komponenten i-a bis i-b, Bernsteinsäure;
i-b) 0 bis 20 mol %, bezogen auf die Komponenten i-a bis i-b, einer oder mehrerer C₆-C₂₀ - Dicarbonsäuren;
i-c) 99 bis 102 mol %, vorzugsweise 99 bis 100 mol %, bezogen auf die Komponenten i-a bis i-b, 1,3 Propandiol oder 1,4-Butandiol;
i-d) 0 bis 1 Gew.- %, bezogen auf die Komponenten i-a bis i-c eines Kettenverlängerers oder Verzweigers;

Die Synthese der Polyester i der WO 2010/034711 erfolgt vorzugsweise in einer direkten Polykondensationsreaktion der einzelnen Komponenten. Die Dicarbonsäurederivate werden dabei zusammen mit dem Diol in Anwesenheit eines Umesterungskatalysators direkt zum Polykondensat hohen Molekulargewichts umgesetzt. Auf der anderen Seite kann ein Copolyester auch durch Umesterung von Polybutylensuccinat (PBS) mit C₆-C₂₀-Dicarbonsäuren in Gegenwart von Diol gewonnen werden. Als Katalysatoren werden üblicherweise Zink-, Aluminium- und insbesondere Titankatalysatoren eingesetzt. Titankatalysatoren wie Tetra(isopropyl)orthotitanat und insbesondere Tetraisobutoxytitanat (TBOT) haben gegenüber den in der Literatur häufig verwendeten Zinn-, Antimon-, Kobalt- und Bleikatalysatoren wie beispielsweise Zinndioctanoat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie unmittelbar in die Umwelt gelangen.

Die genannten Polyester lassen sich darüber hinaus nach den in JP 2008-45117 und EP-A 488 617 beschriebenen Verfahren herstellen. Als vorteilhaft hat es sich erwiesen, zunächst die Komponenten a bis c zu einem Präpolyester mit einer VZ von 50 bis 100 mL/g, vorzugsweise 60 bis 80 mL/g umzusetzen und diesen anschließend mit einem Kettenverlängerer i-d, beispielsweise mit Diisocyanaten oder mit epoxidhaltigen Polymethacrylaten in einer Kettenverlängerungsreaktion zu einem Polyester i mit einer VZ von 100 bis 450 mL/g, vorzugsweise 150 bis 300 mL/g umzusetzen.

Als Säurekomponente i-a werden 80 bis 100 mol %. bezogen auf die Säurekomponenten a und b, vorzugsweise 90 bis 99 mol%, und insbesondere bevorzugt 92 bis 98 mol% Bernsteinsäure eingesetzt. Bernsteinsäure ist auf petrochemischem Weg sowie vorzugsweise aus nachwachsenden Rohstoffen wie beispielsweise in EPA 2185682 beschrieben zugänglich. EPA 2185682 offenbart ein biotechnologisches Verfahren zur Herstellung von Bernsteinsäure und 1,4-Butandiol ausgehend von unterschiedlichen Kohlehydraten mit Mikroorganismen aus der Klasse der *Pasteurellaceae.*

Säurekomponente i-b wird in 0 bis 20 mol%, vorzugsweise 1 bis 10 mol%, und insbesondere bevorzugt 2 bis 8 mol% bezogen auf die Säurekomponenten i-a und i-b, eingesetzt.

Unter C₆-C₂₀-Dicarbonsäuren i-b sind insbesondere Adipinsäure, Korksäure, Azelainsäure, Sebazinsäure, Brassylsäure und/oder C₁₈-Dicarbonsäure zu verstehen. Bevorzugt sind Korksäure, Azelainsäure, Sebazinsäure und/oder Brassylsäure. Die obengenannten Säuren sind aus nachwachsenden Rohstoffen zugänglich. Beispielsweise Sebazinsäure ist aus Rizinusöl zugänglich. Derartige Polyester zeichnen sich durch ein exzellentes biologisches Abbauverhalten aus [Literatur: Polym. Degr. Stab. 2004, 85, 855-863].

Die Dicarbonsäuren i-a und i-b können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden. Dabei können die Dicarbonsäuren oder deren esterbildenden Derivate, einzeln oder als Gemisch eingesetzt werden.

Die Diole 1,3-Propandiol und 1,4-Butandiol sind ebenfalls aus nachwachsenden Rohstoffen zugänglich. Es können auch Mischungen der beiden Diole verwendet werden. Aufgrund der höheren Schmelztemperaturen und der besseren Kristallisation des gebildeten Copolymers ist 1,4-Butandiol als Diol bevorzugt.

In der Regel wird zu Beginn der Polymerisation das Diol (Komponente i-c) zu den Säuren (Komponenten i-a und i-b) in einem Verhältnis von Diol zu Disäuren von 1,0:1 bis 2,5:1 und vorzugsweise 1,3:1 bis 2,2:1 eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Disäure/Diol-Verhältnis von 0,98 bis 1,00 verstanden.

In einer Ausführungsform werden 0 bis 1 Gew-%, vorzugsweise 0,1 bis 0,9 Gew.-% und insbesondere bevorzugt 0,1 bis 0,8 Gew.-% bezogen auf das Gesamtgewicht der Komponenten i-a bis i-b, eines Verzweiger i-d und/oder Kettenverlängerers i-d' ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere einem epoxidhaltigen Poly(meth)acrylats), einem mindestens trifunktionellen Alkohol oder einer mindestens trifunktionellen Carbonsäure eingesetzt. In der Regel werden keine Verzweiger, sondern lediglich Kettenverlängerer eingesetzt.

Als bifunktionelle Kettenverlängerer eignen sich beispielsweise Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat, 1,6-Hexamethylendiisocyanat, Isophorondiisocyanat oder Methylen-bis(4-isocyanatocyclo-hexan) verstanden. Besonders bevorzugte sind Isophorondiisocyanat und insbesondere 1,6-Hexamethylendiisocyanat.

Unter aliphatischen Polyestern i werden insbesondere Polyester wie Polybutylensuccinat (PBS), Polybutylensuccinat-co-adipat (PBSA), Polybutylensuccinat-co-sebacat (PBSSe), Polybutylensuccinat-co-azelat (PBSAz) oder Polybutylensuccinat-co-brassylat (PBSBr) verstanden. Die aliphatischen Polyester PBS und PBSA werden beispielsweise von Mitsubishi unter dem Namen BioPBS^{®} vermarktet. Neuere Entwicklungen sind in der WO 2010/034711 beschrieben.

Die Polyester i weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 50000 g/mol, ein gewichtsmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 30 und 450, vorzugsweise von 100 bis 400 g/mL (gemessen in o-Dichlorbenzol/Phenol (Gewichtsverhältnis 50/50)). Der Schmelzpunkt liegt im Bereich von 85 bis 130, bevorzugt im Bereich von 95 bis 120°C. Der MVR Bereich nach DIN EN 1133-1 liegt im Bereich von 8 bis 50 und insbesondere 15 bis 40 cm³/10 min (190 °C, 2,16 kg).

Unter aliphatischen Polyestern der Schicht B werden auch Polyhydroxyalkanoate wie Polycaprolacton (PCL), Poly-3-hydroxybutyrat (PHB), Poly-3-hydroxybutyrate-co-3-hydroxyvalerat (P(3HB)-co-P(3HV)), Poly-3-hydroxybutyrate-co-4-hydroxybutyrat (P(3HB)-co-P(4HB)) und Poly-3-hydroxybutyrate-co-3-hydroxyhexanoate (P(3HB)-co-P(3HH)) und insbesondere Polymilchsäure (PLA) eingesetzt.

Polymilchsäure b2 mit dem folgenden Eigenschaftsprofil wird bevorzugt eingesetzt:
einer Schmelzvolumenrate (MVR bei 190° C und 2.16 kg nach ISO 1133-1 DE von 0.5 bis 100 und insbesondere von 5 bis 50 cm³/10 Minuten)
einem Schmelzpunkt unter 240° C;
einem Glaspunkt (Tg) größer 55°C
einem Wassergehalt von kleiner 1000 ppm
einem Monomeren-Restgehalt (Lactid) von kleiner 0.3%
einem Molekulargewicht von größer 80 000 Dalton.

Bevorzugte Polymilchsäuren sind kristallinen Polymilchsäuretypen der Fa. NatureWorks wie beispielsweise Ingeo^{®} 6201 D, 6202 D, 6251 D, 3051 D, und 3251 D und insbesondere 4043 D und 4044 D sowie Polymilchsäuren der Fa. Total Corbion wie beispielsweise Luminy^{®} L175 und LX175 Corbion und Polymilchsäuren der Fa. Hisun wie Revode^{®} 190 oder 110. Aber auch amorphe Polymilchsäuretypen können geeignet sein wie beispielsweise Ingeo^{®} 4060 D der Fa. NatureWorks.

Unter aliphatisch-aromatischen Polyestern b1 in der Schicht B sind lineare, kettenverlängerte und gegebenenfalls verzweigte und kettenverlängerte Polyester zu verstehen, wie beispielsweise in der WO 96/15173 bis 15176 oder in der WO 98/12242, auf die ausdrücklich Bezug genommen wird, beschrieben. Mischungen unterschiedlicher teilaromatischer Polyester kommen ebenso in Betracht. Interessante jüngere Entwicklungen basieren auf nachwachsenden Rohstoffen (siehe WO 2010/034689). Insbesondere sind unter Polyestern b1 Produkte wie ecoflex^{®} (BASF SE) zu verstehen.

Zu den bevorzugten Polyestern b1 zählen Polyester, die als wesentliche Komponenten enthalten:
b1-i) 30 bis 70 mol-%, vorzugsweise 40 bis 60 und insbesondere bevorzugt 50 bis 60 mol-%, bezogen auf die Komponenten b1-i) und b1-ii), einer aliphatischen Dicarbonsäure oder Mischungen davon, vorzugsweise wie im Folgenenden ausgeführt: Adipinsäure und insbesondere Azelainsäure, Sebacinsäure und Brassylsäure,
b1-ii) 30 bis 70 mol-%, vorzugsweise 40 bis 60 und insbesondere bevorzugt 40 bis 50 mol-%, bezogen auf die Komponenten b1-i) und b1-ii), einer aromatischen Dicarbonsäure oder Mischungen davon, vorzugsweise wie im Folgenenden ausgeführt: Terephthalsäure,
b1-iii)98 bis 100 mol-%, bezogen auf die Komponenten b1-i) und b1-ii), 1,4-Butandiol und 1,3-Propandiol; und
b1-iv)0 bis 2 Gew.-%, vorzugsweise 0,1 bis 1 Gew.-%, bezogen auf die Komponenten b1-i) bis b1-iii), eines Kettenverlängerers, insbesondere eines di- oder polyfunktionellen Isocyanats, vorzugsweise Hexamethylendiisocyanats und gegebenenfalls eines Verzweigers vorzugsweise: Trimethylolpropan, Pentaerythrit und insbesondere Glycerin.

Als aliphatische Disäuren und die entsprechenden Derivate b1-i kommen im Allgemeinen solche mit 6 bis 18 Kohlenstoffatomen, vorzugsweise 9 bis 14 Kohlenstoffatomen, in Betracht. Sie können sowohl linear als auch verzweigt sein.

Beispielhaft zu nennen sind: Adipinsäure, Azelainsäure, Sebacinsäure, Brassylsäure und Suberinsäure (Korksäure). Dabei können die Dicarbonsäuren oder deren esterbildenden Derivate, einzeln oder als Gemisch aus zwei oder mehr davon eingesetzt werden.

Bevorzugt werden Adipinsäure, Azelainsäure, Sebacinsäure, Brassylsäure oder deren jeweilige esterbildenden Derivate oder Mischungen davon eingesetzt. Besonders bevorzugt werden Azelain- oder Sebacinsäure oder deren jeweilige esterbildenden Derivate oder Mischungen davon eingesetzt.

Insbesondere bevorzugt sind die folgenden aliphatisch-aromatischen Polyester: Polybutylenadipat-coterephthalat (PBAT), Polybutylenadipat-co-azelatterephthalat (PBAAzT) Polybutylenadipat-co-sebacatterephthalat (PBASeT), Polybutylenazelat-coterephthalat (PBAzT) und Polybutylensebacat-coterephthalat (PBSeT), sowie Mischungen dieser Polyester.

Aufgrund der besseren Heimkompostierbarkeit nach dem australischen Standard AS 5810-2010 und ISO 14855-1 (2012) sind Polybutylenadipat-co-azelatterephthalat (PBAAzT) Polybutylenadipat-co-sebacatterephthalat (PBASeT) Polybutylenazelat-co-terephthalat (PBAzT) und Polybutylensebacat-coterephthalat (PBSeT), sowie Mischungen von Polybutylenadipat-coterephthalat (PBAT) mit Polybutylenazelat-co-terephthalat (PBAzT) und Polybutylensebacat-coterephthalat (PBSeT) besonders bevorzugt.

Die aromatischen Dicarbonsäuren oder deren esterbildende Derivate b1-ii können einzeln oder als Gemisch aus zwei oder mehr davon eingesetzt werden. Besonders bevorzugt wird Terephthalsäure oder deren esterbildende Derivate wie Dimethylterephthalat, verwendet.

Die Diole b1-iii - 1,4-Butandiol und 1,3- Propandiol - sind als nachwachsender Rohstoff zugänglich. Es können auch Mischungen der genannten Diole verwendet werden.

In der Regel werden 0 bis 1 Gew-%, vorzugsweise 0,1 bis 1,0 Gew.-% und insbesondere bevorzugt 0,1 bis 0,3 Gew.-%, bezogen auf das Gesamtgewicht des Polyesters, eines Verzweigers und/oder 0 bis 1 Gew-%, vorzugsweise 0,1 bis 1,0 Gew.- %, bezogen auf das Gesamtgewicht des Polyesters, eines Kettenverlängerers (b1-vi) eingesetzt. Bevorzugt werden als Kettenverlängerer ein di- oder polyfunktionellen Isocyanat, vorzugsweise Hexamethylendiisocyanat und als Verzweigers Polyole wie vorzugsweise Trimethylolpropan, Pentaerythrit und insbesondere Glycerin eingesetzt.

Die Polyester b1 weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Der MVR (Schmelzvolumenrate) nach EN ISO 1133-1 DE (190°C, 2,16 kg Gewicht) der Polyester b1 liegt im Allgemeinen bei 0,5 bis 20, bevorzugt bei 5 bis 15 cm³/10 min. Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

In der Regel werden 0 bis 25 Gew.-%, insbesondere 3 bis 20 Gew.-%, bezogen auf das Gesamtgewicht der Schicht B, mindestens eines mineralischen Füllstoffs b3 ausgewählt aus der Gruppe bestehend aus: Kreide, Graphit, Gips, Leitruß, Eisenoxid, Calciumsulfat, Dolomit, Kaolin, Siliziumdioxid (Quarz), Natriumcarbonat, Calciumcarbonat, Titandioxid, Silikat, Wollastonit, Glimmer, Montmorillonit und Talkum eingesetzt. Bevorzugte mineralische Füllstoffe sind Siliziumdioxid, Kaolin und Calciumsulfat und insbesondere bevorzugt sind: Calciumcarbonat und Talkum.

Eine bevorzugte Ausführungssform der Schicht B enthält:
b1) 60 bis 100 Gew.-%, vorzugsweise 60 bis 99,95 Gew.-% eines aliphatisch-aromatischen Polyester ausgewählt aus der Gruppe bestehend aus: Polybutylenadipat-coterephthalat, Polybutylenazelat-coterephthalat und Polybutylensebacat-coterephthalat;
b2) 0 bis 15 Gew.-%, vorzugsweise 3 bis 12 Gew.-% eines Polyhydroxyalkanoats, vorzugsweise einer Polymilchsäure;
b3) 0 bis 25 Gew.-%, vorzugsweise 3 bis 20 Gew.-% eines mineralischen Füllstoffs.

Insbesondere bevorzugt enthält die Schicht B zusätzlich
b4) 0,05 bis 0,3 Gew.-% eines Gleitmittels ausgewählt aus Erucasäureamid und Stearinsäureamid.

In einer Ausführungsform enthält die Schicht B kein Gleitmittel oder Entformungsmittel. Diese Ausführungsform weist bis zu Schichtdicken von 150 µm eine sehr gute Verträglichkeit mit der Schicht A auf, sodass die Haftung der Laminierfolie an das Substrat wie insbesondere Papier oder Karton sehr gut ist. Dies zeigt sich, dass bei dem Versuch die Folie wieder vom Papier oder Karton zu lösen Faserriss auftritt.

In einer weiteren Ausführungsform enthält die Schicht B 0,05 bis 0,3 Gew.-%, bezogen auf das Gesamtgewicht der Schicht B, eines Gleitmittels oder Entformungsmittels wie Erucasäureamid oder vorzugsweise Stearinsäureamid. Das Gleitmittel oder Entformungsmittel verhindert insbesondere im Zusammenspiel mit Antiblockmitteln ein Verblocken beim Abrollen der Polyesterfolie, die in einem weiteren Schritt zum Laminieren verwendet werden kann. Das Laminat, das eine Polyester enthaltenden Schicht aufweist, ermöglicht eine später ggf. erfolgende Verformung des Laminats. Diese Ausführungsform weist bis zu Schichtdicken von 50 µm, im Falle von Stearinsäureamid sogar bis zu 80 µm eine sehr gute Verträglichkeit mit der Schicht A auf, sodass die Haftung der Laminierfolie an das Substrat wie insbesondere Papier oder Karton sehr gut ist. Dies zeigt sich daran, dass bei dem Versuch die Folie wieder vom Papier oder Karton zu lösen Faserriss auftritt. Werden hingegen Gleitmittel oder Entformungsmittel wie Behensäureamid oder Erucasäureamid bzw. Stearinsäureamid in höheren Konzentrationen als 0,3 Gew.-% in der Schicht B verwendet, so wird eine schlechte Verträglichkeit mit der Schicht A beobachtet. Bevorzugt weist Schicht B für den Fall, dass sie Stearinsäureamid enthält, eine Dicke von 5 bis 50 µm, bevorzugt 10 bis 50 µm, auf. Für den Fall, dass Schicht B Ercucasäureamid enthält, liegt die Schichtdicke vorzugsweise im Bereich von 5 bis 80 µm, mehr bevorzugt im Bereich von 5 bis 50 µm, besonders bevorzugt im Bereich von 10 bis 50 µm.

Weiterhin kann der erfindungsgemäße Compound der Komponenten i bis v weitere dem Fachmann bekannte, Additive enthalten. Beispielsweise die in der Kunststofftechnik üblichen Zusatzstoffe wie Stabilisatoren; Nukleierungsmittel wie die bereits obengenannten mineralischen Füllstoffe b3 oder auch kristalline Polymilchsäure; Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Antistatikum, UV-Absorbers; UV-Stabilisators; Antifog-Mittel, Pigmente oder vorzugsweise biologisch abbaubare Farbstoffe Sicoversal^{®} der Fa. BASF SE. Die Additive werden in Konzentrationen von 0 bis 2 Gew.-%, insbesondere 0,1 bis 2 Gew.-% bezogen auf die Schicht B eingesetzt. Weichmacher können in 0,1 bis 10 Gew.-% in der erfindungsgemäßen Schicht B enthalten sein.

Für flexible Verpackungen in der Nahrungsmittelindustrie sind hohe Anforderungen an die Sauerstoffbarriere bzw. Aromabarriere gestellt. Hier hat sich ein Schichtaufbau mit einer zusätzlichen Barriereschicht C als vorteilhaft erwiesen. Ein geeigneter Schichtaufbau ist beispielsweise A/B/C/B, wobei die Schichten A und B die zuvor genannte Bedeutung haben und Schicht C eine Barriereschicht bestehend aus Polyglycolsäure (PGA), Ethylenvinylalkohol (EVOH) oder vorzugsweise Polyvinylalkohol (PVOH) darstellt.

Die Sauerstoff-Barriereschicht C weist üblicherweise eine Schichtdicke von 2 bis 10 µm auf und besteht vorzugsweise aus Polyvinylalkohol. Ein geeignetes PVOH ist beispielsweise G-Polymer der Fa. Mitsubishi Chemicals, insbesondere G-Polymer BVE8049. Da das PVOH an der Biopolymerschicht B ungenügend haftet, setzt sich die Barriereschicht vorzugsweise aus den Einzelschichten C'/C/C' zusammen wobei Schicht C' eine Haftvermittlerschicht darstellt. Als Haftvermittler ist beispielsweise das Copolymer BTR-8002P der Fa. Mitsubishi Chemicals geeignet. Die Haftvermittlerschicht weist üblicherweise eine Schichtdicke von 2 bis 6 µm auf. Die Laminierfolie weist in diesen Fällen insgesamt beispielsweise den Schichtaufbau A/B/C'/C/C'/B oder B' auf.

Ein weiterer geeigneter Schichtaufbau ist A/B/C/B', wobei die Schichten A, B und C die zuvor genannte Bedeutung haben und Schicht B' eine Schichtdicke von 10 bis 100 µm aufweist und zusätzlich zu den für Schicht B genannten Komponenten als Gleitmittel oder Entformungsmittel 0,1 bis 0,5 Gew.-%, vorzugsweise 0,2 bis 0,5 Gew.-%, bezogen auf das Gesamtgewicht der Schicht B' Erucasäureamid, Stearinsäureamid oder vorzugsweise Behensäureamid enthält.

Die erfindungsgemäßen Laminierfolie werden zur Verbundfolienkaschierung eines Substrats ausgewählt aus der Gruppe biologisch abbaubare Folie, Metallfolie, metallisierte Folie, Zellophan oder vorzugsweise Papiererzeugnisse genutzt.

Der Begriff "Papiererzeugnisse" umfasst im Sinne der vorliegenden Erfindung alle Arten von Papier und Karton.

Geeignete Fasern für die Herstellung der genannten Papiererzeugnisse sind alle üblicherweise verwendeten Arten, z.B. Holzstoff, gebleichter und ungebleichter Zellstoff, Papierstoffe aus allen Einjahrespflanzen und Altpapier (auch in Form von Ausschuss, entweder gestrichen oder ungestrichen). Die genannten Fasern können entweder allein oder in Form einer beliebigen Mischung aus diesen verwendet werden, um die Zellstoffe zu erzeugen, aus denen die Papierprodukte hergestellt werden. Der Begriff Holzstoff umfasst z. B. Holzschliff, thermomechanischer Zellstoff (TMP), chemothermomechanischer Zellstoff (CTMP), Druckholzschliff, halbchemischer Zellstoff, chemischer Hochertrags-Zellstoff und Refiner-Holzstoff (RMP). Beispielhaft sind Sulfatzellstoffe, Sulfit-Zellstoffe und Soda-Zellstoffe geeignete Chemie-Zellstoffe. Beispiele für geeignete einjährige Pflanzen zur Herstellung von Papierstoffen sind Reis, Weizen, Zuckerrohr und Kenaf.

Den Zellstoffen werden üblicherweise Mengen von 0,01 bis 3 Gew.-%, vorzugsweise von 0,05 bis 1 Gew.-%, Leim, jeweils bezogen auf den Feststoffgehalt der Papiertrockensubstanz, zugesetzt, die je nach gewünschtem Leimungsgrad der zu veredelnden Papiere variieren. Das Papier kann darüber hinaus weitere Stoffe enthalten, z. B. Stärke, Pigmente, Farbstoffe, optische Aufheller, Biozide, Papierfestiger, Fixiermittel, Entschäumer, Retentionsmittel und/oder Entwässerungshilfen.

Die hergestellten Verbundfolien weisen vorzugsweise folgenden Aufbau auf:
i) ein Papier mit einem Flächengewicht von 30 bis 600 g/m², vorzugsweise von 40 bis 400 g/m², besonders bevorzugt von 50 bis 150 g/m²,
ii) die erfindungsgemäße Laminierfolie mit einer Dicke von insgesamt 5,5 bis 300 µm, vorzugsweise von 10 bis 150 µm, und mit besonderer Bevorzugung von 15 bis 100 µm.

Für die Papierschichten können die unterschiedlichsten Materialien verwendet werden, z. B. weißer oder brauner Kraftliner, Zellstoff, Altpapier, Wellpappe oder Rechengut.

Die Gesamtdicke des Papier-Folien-Verbundes liegt in der Regel zwischen 31 und 1000 g/m². Durch Kaschierung kann vorzugsweise ein Papier-Folien-Verbund von 80-500 µm und durch Extrusionsbeschichtung besonders bevorzugt ein Papier-Folien-Verbund von 50-300 µm hergestellt werden.

Die Herstellung einer Verbundfolie aus der erfindungsgemäßen Laminierfolie und dem Substrat erfolgt vorzugsweise in mehreren Schritten: zunächst wird bevorzugt i) die Oberfläche der Schicht B durch eine Koronabehandlung aktiviert; ii) eine wässrige Dispersion eines Polyurethan-Klebers wird aufgetragen und getrocknet und iii) die so erhaltene Laminierfolie der Ansprüche 1 bis 7 wird mit der Seite A durch einen geeigneten Walzendruck auf das Substrat aufgepresst.

Eine Oberflächenbehandlung der Schicht B vor der Beschichtung mit der Polymerdispersion A ist nicht zwingend erforderlich. Bessere Ergebnisse können jedoch erzielt werden, wenn die Oberfläche der Schicht B vor dem Beschichtungsprozess modifiziert wird. Hier können konventionelle Oberflächenbehandlungen, wie z. B. die Koronabehandlung, eingesetzt werden, um die Haftwirkung zu verstärken. Die Korona-Behandlung oder andere Oberflächenbehandlungen werden in dem Maße durchgeführt, wie es für eine ausreichende Benetzbarkeit mit der Beschichtungsmasse erforderlich ist. Eine Koronabehandlung mit ca. 10 Watt pro Quadratmeter und Minute ist in der Regel für diesen Zweck ausreichend. Alternativ oder zusätzlich können auch Primer oder Zwischenschichten zwischen Schicht B und Klebstoffbeschichtung A verwendet werden. Die Verbundfolien und insbesondere die Laminierfolie können wie erwähnt auch andere, zusätzliche Funktionsschichten aufweisen, z. B. Barriereschichten, Druckschichten, Farbschichten oder Lackschichten oder Schutzschichten. Die Lage der Funktionsschichten kann dabei vorzugsweise außen, d.h. auf der der klebstoffbeschichteten Seite abgewandten Seite der Schicht B sein.

Innerhalb der erfindungsgemäßen Verbundfolie hat das Substrat (z. B. Papier) einen Schutz vor Mineralöl und anderen Ölsorten sowie vor Fett und Feuchtigkeit, da die Laminierfolie eine entsprechende Barrierewirkung ausübt. Andererseits haben die Lebensmittel bei Verwendung der Verbundfolien für Lebensmittelverpackungen einen Schutz vor den z.B. im Altpapier vorhandenen Mineralölen und Mineralstoffen, da die Laminierfolie diese Barrierewirkung ausübt. Da die Verbundfolie darüber hinaus sowohl mit sich selbst als auch mit Papier, Karton, Zellophan und Metall verschweißt werden kann, ermöglicht sie die Herstellung von z. B. Kaffeebechern, Getränkekartons oder Kartons für Tiefkühlprodukte.

Die Verbundfolie eignet sich besonders zur Herstellung von Papierbeuteln für trockene Lebensmittel, z.B. Kaffee, Tee, Suppenpulver, Soßenpulver; für Flüssigkeiten, z.B. Kosmetika, Reinigungsmittel, Getränke; Schlauchlaminate; Papiertragetaschen, Papierlaminate und Coextrudate für Speiseeis, Süßwaren (z.B. Schokoladen- und Müsliriegel) und Papierklebeband; Pappbecher, Joghurtbecher; Fertiggerichte-Schalen; gewickelte Kartonagen (Dosen, Fässer), nassfeste Kartons für Umverpackungen (Weinflaschen, Lebensmittel); Obstkisten aus beschichteter Pappe; Fast-Food-Teller; Klammerschalen; Getränkekartons und Kartons für Flüssigkeiten, wie Wasch- und Reinigungsmittel, Kartons für Tiefkühlprodukte, Eisverpackungen (z. B. Eisbecher, Wickelmaterial) z. B. Eisbecher, Umhüllungsmaterial für konische Eiswaffeln); Papieretiketten; Blumentöpfe und Pflanzentöpfe.

Es kann vorteilhaft sein, die Laminierfolie im Extrusionsbeschichtungsverfahren auf das Substrat aufzubringen. Als Zwischenschicht wird die oben erwähnte wässrige Kaschierklebstoffzubereitung (Polymerdispersion A) aufgetragen. Der Vorteil bei der Verwendung der Kaschierklebstoffzubereitung im Extrusionsbeschichtungsverfahren liegt in der Möglichkeit, die Extrusionstemperatur zu senken. Die verwendeten milden Bedingungen sparen Energie und schützen vor einer Zersetzung des biologisch abbaubaren oder vorzugsweise heimkompostierbaren Polymers.

Dispersionsbeschichtungen erfordern keine Erwärmung vor der Applikation. Die Auftragstechnik ist vergleichbar mit der von Schmelzklebstoffen, wenn es sich um blattförmige Beschichtungen handelt. Die Bahngeschwindigkeiten sind sehr hoch: bis zu 3000 m/min. Dispersionsbeschichtungsprozesse können daher auch on line auf Papiermaschinen durchgeführt werden.

Bei dünnen Schichten ist es auch möglich, die Schicht A in Form von Hotmelt aufzutragen, gewissermaßen als Spezialfall des Extrusionsbeschichtungsprozesses oder des Dispersionsauftragsverfahrens. Dieses Verfahren ist in Ullmann, TSE Troller-Beschichtung beschrieben. Der Schmelzklebstoff (Hotmelt) wird aus einem auf etwa 150 bis 200°C vorgewärmten Vorratsbehälter in die Düse gepumpt, durch die das Material auf die Oberfläche aufgetragen wird.

Die erfindungsgemäß hergestellten Verbundfolien eignen sich insbesondere zur Herstellung von flexiblen Verpackungen, insbesondere für Lebensmittelverpackungen.

Daher sieht die Erfindung die Verwendung der hierin beschriebenen Laminierfolie zur Herstellung von Verbundfolien vor, die biologisch abbaubar oder vorzugsweise unter Heimkompostbedingungen biologisch abbaubar sind und wobei die Verbundfolie Teil einer heimkompostierbaren flexiblen Verpackung ist.

Ein Vorteil der Erfindung besteht darin, dass die erfindungsgemäß verwendete Laminierfolie eine gute adhäsive Verbindung verschiedener Stoffe wie Substrat und Schicht B untereinander ermöglicht, wodurch der geklebte Verbund eine hohe Festigkeit erhält. Die erfindungsgemäß hergestellten Verbundfolien weisen darüber hinaus eine gute biologische Abbaubarkeit und insbesondere Heimkompostierbarkeit auf.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% nach 180 Tagen aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO₂-freie Luft durch gereiften Kompost während des Kompostierens strömen gelassen und dieser einem definiertem Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Die vorliegende Erfindung stellt vorzugsweise Laminierfolien bzw. Verbundfolien enthaltend diese Laminierfolien zur Verfügung, die unter Heimkompostbedingungen (25 ±5°C) biologisch abbaubar sind. Heimkompostbedingungen bedeuten die Laminierfolien bzw. Verbundfolien werden innerhalb von 360 Tagen zu mehr als 90 Gew.-% in CO₂ und Wasser abgebaut.

Die Heimkompostierbarkeit wird nach dem australischen Standard AS 5810-2010 bzw. der französischen Norm NF T 51-800 oder ISO 14855-1 (2012) "Bestimmung der endgültigen aeroben biologischen Abbaubarkeit von Kunststoffen unter kontrollierten Kompostierungsbedingungen - Verfahren durch Analyse des entwickelten Kohlendioxids" bei Umgebungstemperatur (28 ±2 °C) getestet, um die Heimkompostierungsbedingungen anstelle der im ISO-Standard 14855-1 (2012) beschriebenen Temperatur von 58 °C zu simulieren.

### Eigenschaften:

Die Glasübergangstemperaturen wurden mittels Differential Scanning Calorimetrie (ASTM D 3418-08, "Midpoint temperature" der zweiten Heizkurve, Heizrate 20 K/min) bestimmt.

Schmelzpunkte und Schmelzenthalpie werden nach DIN 53765 (1994) bestimmt (Schmelzpunkt = Peaktemperatur) durch Aufheizen mit 20 K/min nach Erwärmung der Polyurethanfolien auf 120°C, Abkühlen mit 20 K/min auf 23°C, dort 20 Stunden tempern.

### Ausgangsstoffe

### Komponenten von Schicht A)

a-1) Epotal^{®} Eco 3702 der Firma BASF SE, wässrige Polyurethandispersion (siehe PCT/EP2021/054570)
a-2) Epotal^{®} P 100 eco der Firma BASF SE, wässrige Polyurethandispersion (siehe WO 2010/034712)

### Komponenten von Schicht B)

### Komponente b1):

b1-1) Polybutylenadipat-coterephthalat: ecoflex^{®} F C1200 der Firma BASF SE (MVR bei 2.5-4.5 cm³/10 min (190°C, 2,16 kg)
b1-2) Polybutylensebacat-coterephthalat : ecoflex^{®} FS C2200 der Firma BASF SE (MVR bei 3-5 cm³/10 min (190°C, 5 kg)

### Komponente b2)

b2-1) Polymilchsäure: (PLA) Ingeo^{®} 4044 D der Firma NatureWorks (MVR 1.5-3.5 cm³/10 min ( 190°C, 2,16 kg))

### Komponente b3)

| | |
|---|---|
| b3-1) | Plustalc H05C der Firma Elementis |
| b3-2) | Calciumcarbonat der Firma Omya |

### Komponente b4)

| | |
|---|---|
| b4-1) | Erucasäureamid: Crodamide^{™} ER der Fa. Croda International Plc |
| b4-2) | Stearinsäureamid: Crodamide SRV der Firma Croda |
| b4-3) | Behensäureamid : Crodamide BR der Firma Croda |

### Komponente b5)

| | |
|---|---|
| b5-1) | Joncryl^{®} ADR 4468, Glycidylmethacrylat der Fa. BASF SE |

### Komponenten von Schicht C)

| | |
|---|---|
| c-1 (C') | BTR-8002P Haftvermittler der Fa. Mitsubishi Chemicals |
| c-2 | G-Polymer BVE8049 PvOH der Fa. Mitsubishi Chemicals |

### Compoundierung der Schicht B

Die in Tabelle 1 aufgeführten Compounds wurden auf einem Extruder des Typs Coperion MC 40 gefertigt. Die Temperaturen am Austritt wurden auf 250°C eingestellt. Anschließend wurde das Extrudat unter Wasser granuliert. Im Anschluss an die Granulatherstellung wurde das Granulat bei 60°C getrocknet.

### Beschreibung der Blasfolienanlagen zur Folienherstellung:

Die Blasfolienanlage bestand aus einem Einwellenextruder mit einem Durchmesser von 30mm und einer Länge von 25D, einem Schmelzewendelverteiler mit 80mm Durchmesser und einem Düsenspalt von 0.8 mm. Das Aufblasverhältnis betrug typischerweise 3.5, was in einer Liegebreite des Folienschlauchs von ungefähr 440 mm resultiert.

Die Mehrschichtfolien entstanden mittels Coextrusion.

**Tabelle 1: Zusammensetzung der Schicht B**

| | b1-1 | b1-2 | b2-1 | b3-1 | b3-2 | b4-1 | b4-2 | b4-3 | b5-1 |
|---|---|---|---|---|---|---|---|---|---|
| | Gew.-% | Gew.-% | Gew.-% | Gew.-% | Gew.-% | Gew.-% | Gew.-% | Gew.-% | Gew.-% |
| I (V) | | 71,9 | 8 | 6 | 14 | | | | 0.1 |
| II | 88,4 | | 9 | | 2,4 | 0,1 | | | 0.1 |
| III | | 75,8 | 9 | 15 | | 0,2 | | | |
| IV | 90,7 | | 9 | | | | 0,2 | | 0.1 |
| V | 87,7 | | 9 | 3 | | | 0.2 | | 0.1 |
| VI | | 75,8 | 9 | 15 | | | 0,2 | | |
| VII | | 75,7 | 9 | 15 | | | 0,3 | | |
| VIII (V) | | 75,8 | 9 | 15 | | | | 0.2 | |
| IX | | 75,8 | 9 | 15 | | | 0.2 | | |
| X (V) | | 75,6 | 9 | 15 | | | 0,4 | | |
| XI | | 76 | 9 | 15 | | | | | |

| | | | | | | | | | |
|---|---|---|---|---|---|---|---|---|---|
| V bedeutet in Tabellen 1 und 2 Vergleichsbeispiel | | | | | | | | | |

**Tabelle 2: Zusammensetzung der Laminierfolie**

| Beispiel | A | B | | C' | C | C' | B/B' | Haftung* |
|---|---|---|---|---|---|---|---|---|
| | 4 µm | µm | Tab. 1 | 4 µm | 8 µm | 4 µm | 17 µm | |
| V-1 | a-1) | 17 | XI | | | | | + |
| V-2 | a-1) | 100 | XI | | | | | + |
| V-3 | a-1) | 200 | XI | | | | | - |
| V-4 | a-1) | 17 | XI | c-1 | c-2 | c-1 | VIII | + |
| V-5 | a-1) | 12 | I | | | | | + |
| 6 | a-1) | 12 | III | | | | | + |
| 7 | a-1) | 12 | IV | | | | | + |
| 8 | a-1) | 12 | V | | | | | + |
| V-9 | a-1) | 60 | V | | | | | -/+ |
| V-10 | a-1) | 10 | VIII | | | | | - |
| 11 | a-1) | 17 | IX | | | | | + |
| 12 | a-1) | 17 | IX | c-1 | c-2 | c-1 | V | + |
| V-13 | a-1) | 17 | X | | | | | - |
| 14 | a-1) | 17 | VII | | | | | + |
| 15 | a-1) | 30 | VI | | | | | + |
| V-16 | a-1) | 150 | VI | | | | | - |
| V-17 | a-1) | 50 | VIII | | | | | - |
| 18 | a-1) | 50 | III | | | | | + |
| V-19 | a-1) | 10 | VIII | | | | | - |

| | | | | | | | | |
|---|---|---|---|---|---|---|---|---|
| *Die Haftung der Laminierfolie an dem Substrat (Papier) wurde wie folgt ermittelt: | | | | | | | | |

Die Basisfolie B wurde auf dem Laborbeschichtungstisch mit der Korona vorbehandelten Seite nach oben fixiert und der zu prüfende Kleber mittels Rakel direkt auf die Folie beschichtet. Der Kleber A wurde für 2 Minuten mit einem Warmluftgebläse getrocknet und dann die Kaschierfolie mit einer Handrolle aufgelegt und in der Rollenkaschierstation bei 70° C, mit einer Walzengeschwindigkeit von 5 m/Minute und einem Kaschierdruck von 6,5 bar auf ein Papier unterschiedlicher Dicke von 50 gsm bis 130 gsm gepresst. Danach wurde das Laminat mittels einer Schneideschablone in 15 Millimeter breite Streifen geschnitten und diversen Lagerungszyklen unterworfen. Nach der Lagerung wurde der Laminatstreifen an der Zugprüfmaschine auseinandergezogen und die dazu benötigte Kraft festgehalten. Die Prüfung erfolgte an einer Zugprüfmaschine im Winkel von 90 Grad mit einer Abzugsgeschwindigkeit von 100 mm/min. Der Prüfstreifen wurden an einer Seite aufgetrennt, eines der nun losen Enden in die obere Klemme, das andere in die untere Klemmbacke der Zugprüfmaschine eingespannt und die Prüfung gestartet.

Die in der letzten Spalte der Tabelle 2 angegebene Bewertung (+) bedeutet: Faserausriss bei einer Kraft >0,6 N/15 mm

Die in der letzten Spalte angegebene Bewertung (-) bedeutet: Kein Faserausriss bei einer Kraft >0,6 N/15 mm

Die in Tabelle 2 angegebenen Versuche zeigen, dass Laminierfolien, die in der Schicht keine Entformungsmittel b4 enthalten bis zu einer Gesamtschichtdicke der Laminierfolie von ca. 150 µm eine sehr gute Haftung auf dem Substrat Papier aufweisen. Werden als Entformungsmittel Erucasäureamid b4-1 oder Stearinsäureamid b4-2 bis zu einer Konzentration von 0,3 Gew.-% eingesetzt, so kann bis zu einer Gesamtschichtdicke der Laminierfolien von ca. 50 - 60 µm eine sehr gute Haftung auf dem Substrat Papier erzielt werden. Wird hingegen Behensäureamid b4-3 in einer Konzentration von 0,2 bis 0,3 Gew.-% als Entformungsmittel eingesetzt oder Stearinsäure in einer Konzentration von 0,4 Gew.-%, so ist die Haftung auf dem Papier bereits bei einer Schichtdicke der Laminierfolie von 10 bzw. 17 µm unzureichend.

### Heimkompostierungstest

Die Heimkompostierbarkeit wird nach dem französischem Standard NF T 51-800 oder ISO 14855-1 (2012) "Bestimmung der endgültigen aeroben biologischen Abbaubarkeit von Kunststoffen unter kontrollierten Kompostierungsbedingungen - Verfahren durch Analyse des entwickelten Kohlendioxids" bei Umgebungstemperatur (28 ±2 °C) getestet, um die Heimkompostierungsbedingungen anstelle der beschriebenen Temperatur von 58 °C zu simulieren.

Die Heimkompostierbarkeit der ca. 60 µm dicken Laminierfolien der Beispiele 4 und 12 wurden unter den obengenannten Bedingungen untersucht und nach 116 Tagen bzw. 157 Tagen ein vollständiger (>90 %) Abbau der Folien beobachtet. Diese Folien erfüllen somit das Kriterium der Heimkompostierbarkeit nach dem australischen Standard AS 5810-2010 und ISO 14855-1 (2012). Es ist daher davon auszugehen, dass die dünneren Folien mit dem Schichtaufbau A/B und einer Zusammensetzung der Schicht B: I, V bis XI (s. Tabelle 1) ebenfalls heimkompostierbar sind.

## Patentansprüche

1. Biologisch abbaubare Laminierfolie mit dem Schichtaufbau A/B, wobei die 0,5 bis 7 µm dicke Schicht A einen Polyurethan- oder Acrylat-klebstoff enthält; und Schicht B einen aliphatischen Polyester und/oder aliphatisch-aromatischen Polyester und 0,05 bis 0,3 Gew.-% eines Gleitmittels ausgewählt aus Erucasäureamid und Stearinsäureamid umfasst, wobei der aliphatisch-aromatische Polyester sich wie folgt zusammensetzt:
b1-i) 30 bis 70 mol %, bezogen auf die Komponenten b1-i und b1-ii, einer aliphatischen C₆-C₁₈-Dicarbonsäure;
b1-ii) 30 bis 70 mol %, bezogen auf die Komponenten b1-i und b1-ii, einer aromatischen Dicarbonsäure;
b1-iii)98 bis 100 mol %, bezogen auf die Komponenten b1-i und b1-ii, 1,3 Propandiol oder 1,4-Butandiol;
b1-iv)0 bis 2 Gew.- %, bezogen auf die Komponenten b1-i bis b1-iii eines Kettenverlängerers und/oder Verzweigers,
wobei die Ercucasäureamid enthaltende Schicht B eine Schichtdicke von 5 bis 80 µm aufweist
und die Stearinsäureamid enthaltende die Schicht B eine Schichtdicke von 5 bis 50 µm aufweist.

2. Laminierfolie nach Anspruch 1, wobei Schicht B zusammengesetzt ist aus:
b1) 60 bis 99,95 Gew.-% eines aliphatisch-aromatischen Polyester ausgewählt aus der Gruppe bestehend aus: Polybutylenadipat-coterephthalat, Polybutylenazelat-coterephthalat und Polybutylensebacat-coterephthalat;
b2) 0 bis 15 Gew.-%, vorzugsweise 3 bis 12 Gew.-% eines Polyhydroxyalkanoats, vorzugsweise einer Polymilchsäure;
b3) 0 bis 25 Gew.-%, vorzugsweise 3 bis 20 Gew.-% eines mineralischen Füllstoffs;
b4) 0,05 bis 0,3 Gew.-% eines Gleitmittels ausgewählt aus Erucasäureamid und
Stearinsäureamid.

3. Laminierfolie nach Anspruch 1 oder 2, wobei Schicht A aus einer wäßrigen Polyurethandispersion gebildet wird, wobei mindestens 60 Gew.-% des Polyurethans zusammengesetzt ist aus:
a1) mindestens einem Diisocyanat;
a2) mindestens einem Polyesterol;
a3) mindestens einer bifunktionellen Carbonsäure ausgewählt aus der Gruppe Dihydroxycarbonsäure und Diaminocarbonsäure; und
wobei die Glastemperatur des Polyurethans unter 20° C liegt oder der Schmelzpunkt des Polyurethans nicht über 20°C liegt und eine Schmelzenthalpie unter 10 J/G aufweist.

4. Laminierfolie nach einem der Ansprüche 1 bis 3, wobei die Schicht B eine Schichtdicke von 10 bis 50 µm aufweist und 0,05 bis 0,3 Gew.-% bezogen auf das Gesamtgewicht der Schicht B, Erucasäureamid enthält.

5. Biologisch abbaubare Laminierfolie mit dem Schichtaufbau A/B/C/B, wobei die Schichten A und B die in den Ansprüchen 1 bis 4 angegebene Bedeutung haben und Schicht C eine Sauerstoff- oder Aroma-Barriereschicht bestehend aus Polyglycolsäure, Ethylenvinylalkohol oder vorzugsweise Polyvinylalkohol darstellt.

6. Laminierfolie nach Anspruch 5, wobei die Barriereschicht aus den Einzelschichten C'/C/C' besteht und Schicht C aus Polyvinylalkohol zusammengesetzt ist und C' eine Haftvermittlerschicht darstellt.

7. Biologisch abbaubare Laminierfolie mit dem Schichtaufbau A/B/C/B', wobei die Schichten A, B und B' die in den Ansprüchen 1 bis 4 angegebene Bedeutung haben und Schicht B' eine Schichtdicke von 10 bis 100 µm aufweist und 0,2 bis 0,5 Gew.-% bezogen auf das Gesamtgewicht der Schicht B', Erucasäureamid, Stearinsäureamid oder vorzugsweise Behensäureamid enthält.

8. Verwendung der Laminierfolien nach einem der Ansprüche 1 bis 7 zur Verbundfolienkaschierung eines Substrats ausgewählt aus der Gruppe biologisch abbaubare Folie, Metallfolie, metallisierte Folie, Zellophan oder vorzugsweise Papier oder Karton.

9. Verfahren zu Herstellung einer Verbundfolie, wobei i) die Oberfläche der Schicht B durch eine Koronabehandlung aktiviert wird; ii) eine wässrige Dispersion eines Polyurethan-Klebers aufgetragen und getrocknet wird und iii) die so erhaltene Laminierfolie der Ansprüche 1 bis 7 mit der Seite A durch einen geeigneten Walzendruck auf das Substrat aufgepresst wird.

## Claims

1. A biodegradable lamination film having the A/B layer structure, wherein layer A of thickness 0.5 to 7 µm comprises a polyurethane or acrylate adhesive; and layer B comprises an aliphatic polyester and/or aliphatic-aromatic polyester and 0.05% to 0.3% by weight of a lubricant selected from erucamide and stearamide, wherein the aliphatic-aromatic polyester is of the following composition:
b1-i) 30 to 70 mol%, based on components b1-i and b1-ii, of an aliphatic C₆-C₁₈ dicarboxylic acid;
b1-ii) 30 to 70 mol%, based on components b1-i and b1-ii, of an aromatic dicarboxylic acid;
b1-iii) 98 to 100 mol%, based on components b1-i and b1-ii, of propane-1,3-diol or butane-1,4-diol;
b1-iv) 0% to 2% by weight, based on components b1-i to b1-iii, of a chain extender and/or branching agent,
where the erucamide-comprising layer B has a layer thickness of 5 to 80 µm
and the stearamide-comprising layer B has a layer thickness of 5 to 50 µm.

2. The lamination film according to claim 1, wherein layer B is composed of:
b1) 60% to 99.95% by weight of an aliphatic-aromatic polyester selected from the group consisting of: polybutylene adipate-co-terephthalate, polybutylene azelate-co-terephthalate and polybutylene sebacate-co-terephthalate;
b2) 0% to 15% by weight, preferably 3% to 12% by weight, of a polyhydroxyalkanoate, preferably a polylactic acid;
b3) 0% to 25% by weight, preferably 3% to 20% by weight, of a mineral filler;
b4) 0.05% to 0.3% by weight of a lubricant selected from erucamide and stearamide.

3. The lamination film according to claim 1 or 2, wherein layer A is formed from an aqueous polyurethane dispersion, wherein at least 60% by weight of the polyurethane is composed of:
a1) at least one diisocyanate;
a2) at least one polyesterol;
a3) at least one bifunctional carboxylic acid selected from the group of dihydroxycarboxylic acid and diaminocarboxylic acid; and
wherein the glass transition temperature of the polyurethane is below 20°C or the melting point of the polyurethane is not above 20°C and has an enthalpy of fusion below 10 J/g.

4. The lamination film according to any of claims 1 to 3, wherein layer B has a layer thickness of 10 to 50 µm and comprises 0.05% to 0.3% by weight, based on the total weight of layer B, of erucamide.

5. A biodegradable lamination film having the A/B/C/B layer structure, wherein layers A and B have the definition given in claims 1 to 4 and layer C is an oxygen or aroma barrier layer consisting of polyglycolic acid, ethylene-vinyl alcohol or preferably polyvinylalcohol.

6. The lamination film according to claim 5, wherein the barrier layer consists of the individual layers C'/C/C' and layer C is composed of polyvinylalcohol and C' is an adhesion promoter layer.

7. A biodegradable lamination film having the A/B/C/B' layer structure, wherein layers A, B and B' have the definition given in claims 1 to 4 and layer B' has a layer thickness of 10 to 100 µm and comprises 0.2% to 0.5% by weight, based on the total weight of layer B', of erucamide, stearamide or preferably behenamide.

8. The use of the lamination films according to any of claims 1 to 7 for composite film lamination of a substrate selected from the group of biodegradable film, metal foil, metallized foil, cellophane or preferably paper or board.

9. A process for producing a composite film, wherein i) the surface of layer B is activated by corona treatment; ii) an aqueous dispersion of a polyurethane adhesive is applied and dried, and iii) the lamination film thus obtained from claims 1 to 7 is pressed onto the substrate by side A by a suitable roller pressure.

## Revendications

1. Feuille de stratification biodégradable ayant la structure de couches A/B, dans laquelle la couche A de 0,5 à 7 µm d'épaisseur contient un adhésif de polyuréthane ou d'acrylate ; et la couche B comprend un polyester aliphatique et/ou un polyester aliphatique-aromatique et 0,05 à 0,3 % en poids d'un lubrifiant choisi parmi un amide de l'acide érucique et un amide de l'acide stéarique, le polyester aliphatique-aromatique se composant comme suit :
b1-i) 30 à 70 % en moles, par rapport aux composants b1-i et b1-ii, d'un acide dicarboxylique aliphatique en C₆-C₁₈ ;
b1-ii) 30 à 70 % en moles, par rapport aux composants b1-i et b1-ii, d'un acide dicarboxylique aromatique ;
b1-iii) 98 à 100 % en moles, par rapport aux composants b1-i et b1-ii, de 1,3-propanediol ou de 1,4-butanediol ;
b1-iv) 0 à 2 % en poids, par rapport aux composants b1-i à b1-iii d'un allongeur de chaîne et/ou d'un ramificateur,
la couche B contenant un amide de l'acide érucique présentant une épaisseur de couche de 5 à 80 µm et la couche B contenant un amide de l'acide stéarique présentant une épaisseur de couche de 5 à 50 µm.

2. Feuille de stratification selon la revendication 1, dans laquelle la couche B est composée de :
b1) 60 à 99,95 % en poids d'un polyester aliphatique-aromatique choisi dans le groupe constitué par : le polybutylène adipate-co-téréphtalate, le polybutylène azélate-co-téréphtalate et le polybutylène sébacate-co-téréphtalate ;
b2) 0 à 15 % en poids, de préférence 3 à 12 % en poids d'un polyhydroxyalcanoate, de préférence d'un acide polylactique ;
b3) de 0 à 25 % en poids, de préférence de 3 à 20 % en poids, d'une charge minérale ;
b4) 0,05 à 0,3 % en poids d'un lubrifiant choisi parmi un amide de l'acide érucique et un amide de l'acide stéarique.

3. Feuille de stratification selon la revendication 1 ou 2, dans laquelle la couche A est formée d'une dispersion aqueuse de polyuréthane, au moins 60 % en poids du polyuréthane étant composé de :
a1) au moins un diisocyanate ;
a2) au moins un polyesterol ;
a3) au moins un acide carboxylique bifonctionnel choisi dans le groupe constitué par l'acide dihydroxycarboxylique et l'acide diaminocarboxylique ; et
la température de transition vitreuse du polyuréthane étant inférieure à 20 °C ou le point de fusion du polyuréthane n'étant pas supérieur à 20 °C et présentant une enthalpie de fusion inférieure à 10 J/G.

4. Feuille de stratification selon l'une quelconque des revendications 1 à 3, dans laquelle la couche B présente une épaisseur de couche de 10 à 50 µm et contient de 0,05 à 0,3 % en poids, par rapport au poids total de la couche B, d'un amide de l'acide érucique.

5. Feuille de stratification biodégradable ayant la structure de couches A/B/C/B, dans laquelle les couches A et B ont la signification indiquée dans les revendications 1 à 4 et la couche C représente une couche barrière à l'oxygène ou à l'arôme constituée d'acide polyglycolique, d'éthylène-alcool vinylique ou, de préférence, d'alcool polyvinylique.

6. Feuille de stratification selon la revendication 5, dans laquelle la couche barrière est constituée des couches individuelles C'/C/C' et la couche C est composée d'alcool polyvinylique et C' est une couche de promoteur d'adhésion.

7. Feuille de stratification biodégradable ayant la structure de couches A/B/C/B', les couches A, B et B' ayant la signification indiquée dans les revendications 1 à 4 et la couche B' ayant une épaisseur de couche de 10 à 100 µm et contenant 0,2 à 0,5 % en poids, par rapport au poids total de la couche B', d'un amide de l'acide érucique, d'un amide de l'acide stéarique ou de préférence d'un amide de l'acide béhénique.

8. Utilisation des feuilles de stratification selon l'une quelconque des revendications 1 à 7 pour le contre-collage de feuilles composites sur un substrat choisi dans le groupe constitué par une feuille biodégradable, une feuille métallique, une feuille métallisée, de la cellophane ou, de préférence, du papier ou du carton.

9. Procédé de fabrication d'une feuille composite, dans lequel i) la surface de la couche B est activée par un traitement corona ; ii) une dispersion aqueuse d'un adhésif polyuréthane est appliquée et séchée ; et iii) la feuille de stratification des revendications 1 à 7 ainsi obtenue est pressée avec le côté A sur le substrat par une pression de cylindrage appropriée.
